(19) Europäisches Patentamt
European Patent Office
Office européen des brevets

(11) **EP 4 383 104 A1**

(12) **EUROPEAN PATENT APPLICATION**

(43) Date of publication:
**12.06.2024 Bulletin 2024/24**

(21) Application number: **22212096.6**

(22) Date of filing: **08.12.2022**

(51) International Patent Classification (IPC):
***G06F 21/52*** *(2013.01)*   ***G06F 21/55*** *(2013.01)*

(52) Cooperative Patent Classification (CPC):
**G06F 21/52; G06F 21/552**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Elektrobit Automotive GmbH**
**91058 Erlangen (DE)**

(72) Inventors:
• **Mars, Ayoub**
**60488 Frankfurt am Main (DE)**
• **Kleinhenz, Thomas**
**60488 Frankfurt am Main (DE)**

(74) Representative: **Continental Corporation**
**c/o Continental Automotive Technologies GmbH**
**Intellectual Property**
**Guerickestr. 7**
**60488 Frankfurt am Main (DE)**

(54) **REAL-TIME DETECTION OF AN ATTACK ON A SOFTWARE PROGRAM**

(57)    The present invention is related to a method, a computer program code, and an apparatus for real-time detection of an attack on a software program running on a platform. The invention is further directed towards a method, a computer program code, and an apparatus for providing a detection model for use in such a method, computer program code, or apparatus. The invention is also directed towards a corresponding detection model. In a first step, a segment of a behavior of the software program is predicted (S1) based on one or more previous segments of its behavior using a trained detection model. Furthermore, a segment of the behavior of the software program is measured (S2). The predicted segment is then compared (S3) with the measured segment. In case the measured segment does not fit to the predicted segment, the occurrence of an attack is determined (S4), and a security event is reported (S6). Optionally, a type of attack may be identified S5 and included in the reported security event.

FIG. 1

**EP 4 383 104 A1**

**Description**

The present invention is related to a method, a computer program code, and an apparatus for real-time detection of an attack on a software program running on a platform. The invention is further directed towards a method, a computer program code, and an apparatus for providing a detection model for use in such a method, computer program code, or apparatus. The invention is also directed towards a corresponding detection model.

Modern motor vehicles, medical devices, cloud devices, home appliances, etc., are equipped with a steadily growing number of processors and also increasingly have the ability to communicate with external entities. As a consequence, there is the risk that advanced attacks may penetrate the vehicle or appliance network to inject malicious code or disrupt the normal execution, etc.

An intrusion detection system (IDS) is a security control system that aims to detect malicious activities in a system or network. There are various types of intrusion detection systems, including network intrusion detection systems, host intrusion detection systems, etc. A distinction can be made between two detection methods that are used in intrusion detection systems, namely static checks, and anomaly detection.

Static checks use a list of detection sensors, such as formality, location, frequency, etc., to detect possible intrusions on the system.

Anomaly detection is usually based on the use of machine learning to build a model of a normal behavior and consider anything behaving differently as an anomaly.

In this regard, the article by M. Müter et al.: "A structured approach to anomaly detection for in-vehicle networks," 2010 Sixth International Conference on Information Assurance and Security, pp. 92-98, discusses the use of an anomaly detection system in automotive in-vehicle networks. Based on properties of typical vehicular networks, like the Controller Area Network (CAN), a set of anomaly detection sensors is introduced, which allow the recognition of attacks during the operation of the vehicle.

US 2019/0215329 A1 discloses a solution for malware detection using machine learning. Synthetic training sets for machine learning are created by identifying and modifying functional features of code in an existing malware training set. By filtering the resulting synthetic code to measure malware impact and novelty, training sets can be created that predict novel malware and to seek to preemptively exhaust the space of new malware. These synthesized training sets can be used in turn to improve training of machine learning models.

Current approaches focus on network intrusion detection systems or malware detection using machine learning. This has the drawback that no protection is provided against misuse of software programs, e.g., secure boot, secure diagnostic, other applications running on top of an OS, etc. Furthermore, no protection is provided against zero-day attacks on software programs.

It is an object of the present invention to provide a solution for detection of an attack on a software program, which is capable of real-time detection of attempts to exploit a software program.

This object is achieved by a method according to claim 1 or 10, by a computer program code according to claim 7 or 13, which implements this method, and by an apparatus according to claim 8 or 14. This object is further achieved by a machine according to claim 9 and a detection model according to claim 15. The dependent claims include advantageous further developments and improvements of the present principles as described below.

According to a first aspect, a method for real-time detection of an attack on a software program running on a platform comprises the steps of:

- predicting a segment of a behavior of the software program based on one or more previous segments of its behavior using a trained detection model;
- comparing the predicted segment with a measured segment of the behavior of the software program; and
- reporting a security event in case the measured segment does not fit to the predicted segment.

Accordingly, a computer program code comprises instructions, which, when executed by at least one processor, cause the at least one processor to perform the following steps for real-time detection of an attack on a software program running on a platform:

- predicting a segment of a behavior of the software program based on one or more previous segments of its behavior using a trained detection model;
- comparing the predicted segment with a measured segment of the behavior of the software program; and
- reporting a security event in case the measured segment does not fit to the predicted segment.

The term computer has to be understood broadly. In particular, it also includes embedded devices, electronic control units and other processor-based data processing devices.

The computer program code can, for example, be made available for electronic retrieval or stored on a computer-readable storage medium.

According to another aspect, an apparatus for real-time detection of an attack on a software program running on a platform comprises:

- a processing unit configured to predict a segment of a behavior of the software program based on one or more previous segments of its behavior using a trained detection model, and to compare the predicted segment with a measured segment of the behavior of the software program; and

- a reporting unit configured to report a security event in case the measured segment does not fit to the predicted segment.

According to the invention, a trained detection model is used for real-time intrusion detection for any software program, i.e., the trained detection model is used as a security sensor for a software program. A software program has a behavior reflected in many features. The underlying assumption is that an attack on the software program causes a detectable change of the behavior. Therefore, the detection model forecasts segments of behavior of the software program based on previous segments of its behavior. The forecasted segment of the behavior is then compared to the measured behavior to check for possible attempts to attack the system. These security checks are performed during multiple time spans during the execution of the software program, ensuring a real-time detection of attempts to attack the system. Once a possible attack is detected, a security event is generated. In response to this security event, actions can be taken in real-time to avoid an exploit of the system. Alternatively, or in addition, a further analysis may be triggered. The described solution can be used with any type of software program, e.g., embedded applications running on top of an operating system or a real-time operating system, applications for secure boot or secure diagnostic, web applications, containers, etc., but also operating system modules and hypervisor modules.

In an advantageous embodiment, the predicted segment includes a trusted boundary for the behavior of the software program. Adding a trusted boundary to the forecasted segment helps to avoid false positives, i.e. the risk of an erroneous detection of an attack is reduced.

In an advantageous embodiment, a time period covered by the predicted segment is constant or adaptable. The detection model computes segments of behavior for subsequent time periods. These time periods can be equal or different, depending on what fits best to the targeted software program.

In an advantageous embodiment, the behavior encompasses one or more software or hardware performance indicators. For example, the performance indicators may include at least one or more of an execution time, a power consumption, a memory consumption, cycle counters, numbers of issued and/or retired instructions, and cache misses. The behavior of a software program is based on its characteristics while running on a target hardware-software platform. For example, modern processors have a performance monitor unit (PMU), which allows gathering various statistics on the operation of the core and its memory system during runtime. Performance monitor units offers many performance event counters that can be used as features for the behavior of the software program running on this specific hardware-software platform. Moreover, power consumption of a software program can also be used, as it correlates with the software program activity. This feature is likewise platform dependent.

In an advantageous embodiment, a type of attack is identified. As part of the detection model or as separate entities, trained classifiers may detect the attack type once an attack has been detected. Information on the type of attack may then be used to choose the appropriate actions to be taken.

Advantageously, a machine comprises an apparatus according to the invention or is configured to perform a method according to the invention for real-time detection of an attack on a software program running on a platform of the machine. For example, the machine may be a motor vehicle or home appliance. For instance, the motor vehicle may be a (semi-)autonomous or manually driven connected car. However, the described solution is likewise suitable for other types of motor vehicles, such as drones, airplanes, or ships. Of course, use of the invention is not limited to these types of machines. Further fields of use are internet of things or cloud-native technologies, such as containers or microservices.

According to another aspect, a method for providing a detection model for real-time detection of an attack on a software program running on a platform comprises the steps of:

- collecting training data for normal execution of the software program and execution of the software program under one or more attacks;
- training one or more detection models with the training data; and
- selecting one detection model among the one or more trained detection models.

Accordingly, a computer program code comprises instructions, which, when executed by at least one processor, cause the at least one processor to perform the following steps for providing a detection model for real-time detection of an attack on a software program running on a platform:

- collecting training data for normal execution of the software program and execution of the software program under one or more attacks;
- training one or more detection models with the training data; and
- selecting one detection model among the one or more trained detection models.

The term computer has to be understood broadly. In particular, it also includes workstations, distributed systems and other processor-based data processing devices.

The computer program code can, for example, be made available for electronic retrieval or stored on a computer-readable storage medium.

According to another aspect, an apparatus for providing a detection model for real-time detection of an attack on a software program running on a platform comprises:

- a collecting unit configured to collect training data for normal execution of the software program and execution of the software program under one or more attacks;
- a processing unit configured to train one or more detection models with the training data; and
- an evaluation unit configured to select one detection model among the one or more trained detection models.

Advantageously, a detection model for real-time detection of an attack on a software program running on a platform is provided by a solution according to the invention.

As already stated above, a software program has a behavior reflected in many features. According to the invention, such features are used to train a machine learning model. Selected features are extracted in a sampling mode to build data samples as time series used to train the real-time detection model. The training and test data are collected for both normal execution and execution under attack. Advantageously, various artificial intelligence algorithms are used and trained. The best model in terms of e.g., accuracy and performance is then selected and used. Various types of artificial intelligence algorithms can be used for the models, e.g., machine learning algorithms. Deep learning algorithms, such as deep neural networks (DNN) or long short-term memory (LSTM) networks, are particularly suitable for this purpose.

In an advantageous embodiment, the training data encompasses one or more software or hardware performance indicators. For example, the performance indicators may include at least one or more of an execution time, a power consumption, a memory consumption, cycle counters, numbers of issued and/or retired instructions, and cache misses. The behavior of a software program is based on its characteristics while running on a target hardware-software platform.

In an advantageous embodiment, machine learning classifiers are built for multiple attack types. The training and test data for the execution under attack can be used to build machine learning classifiers for each attack type, assuming that multiple attack types are used during training. If the detection model detects an exploit or an attempt to exploit the system, then the attack type can be detected by the trained classifiers.

Further features of the present invention will become apparent from the following description and the appended claims in conjunction with the figures.

Figures

Fig. 1    schematically illustrates a method for real-time detection of an attack on a software program running on a platform;

Fig. 2    schematically illustrates a first embodiment of an apparatus for real-time detection of an attack on a software program running on a platform;

Fig. 3    schematically illustrates a second embodiment of an apparatus for real-time detection of an attack on a software program running on a platform;

Fig. 4    schematically illustrates a machine in which a solution according to the invention is implemented;

Fig. 5    schematically illustrates a method for providing a detection model for real-time detection of an attack on a software program running on a platform;

Fig. 6    schematically illustrates a first embodiment of an apparatus for providing a detection model for real-time detection of an attack on a software program running on a platform;

Fig. 7    schematically illustrates a second embodiment of an apparatus for providing a detection model for real-time detection of an attack on a software program running on a platform;

Fig. 8    schematically shows an intrusion detection system;

Fig. 9    shows a high-level concept of a solution according to the invention for detection of an attack on a software program;

Fig. 10   shows a framework for providing a security sensor for a software program, which is based on machine learning;

Fig. 11   shows an intrusion detection system using trained models as security sensors;

Fig. 12   shows real-time detection of an attack during execution of a software program; and

Fig. 13   shows use of trained classifiers for detecting the type of attack on a software program.

Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, by a plurality of individual processors, some of which may be shared, by a graphic processing Unit (GPU), or by banks of GPUs. Moreover, explicit use of the term "processor" or "controller" should not be construed to refer exclusively to hardware capable of executing software, and may implicitly include, without limitation, digital signal processor (DSP) hardware, systems on a chip, microcontrollers, read only memory (ROM) for storing software, random-access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

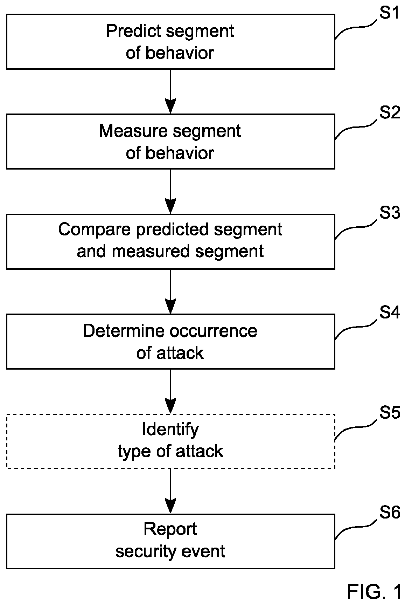

Fig. 1 schematically illustrates a method according to the invention for real-time detection of an attack on a software program running on a platform. In a first step, a segment of a behavior of the software program is predicted S1 based on one or more previous segments of its behavior using a trained detection model. The behavior may encompass one or more software or hardware performance indicators. The predicted segment may include a trusted boundary for the behavior of the software program. A time period covered by the predicted segment may be constant or adaptable. Furthermore, a segment of the behavior of the software program is measured S2. The predicted segment is then compared S3 with the measured segment. In case the measured segment does not fit to the predicted segment, the occurrence of an attack is determined S4, and a security event is reported S6. Optionally, a type of attack may be identified S5 and included in the reported security event.

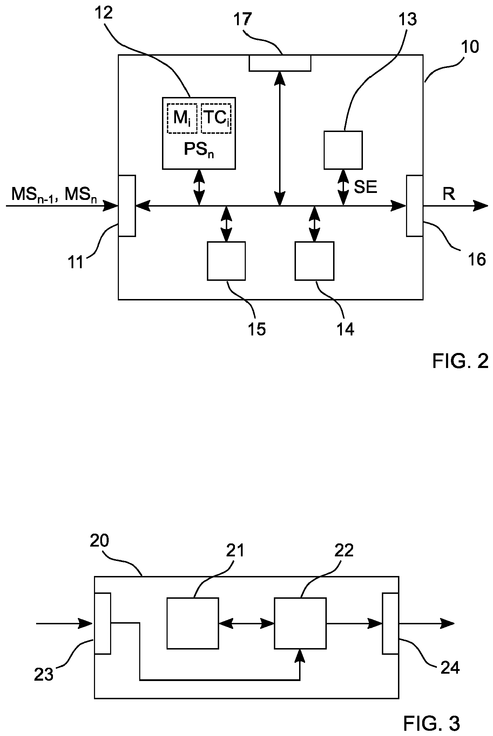

Fig. 2 schematically illustrates a block diagram of a first embodiment of an apparatus 10 according to the invention for real-time detection of an attack on a software program running on a platform. The apparatus 10 has an input 11, via which a processing unit 12 receives segments $MS_{n-1}$, $MS_n$ of a behavior of a software program. The processing unit 12 is configured to predict a segment $PS_n$ of the behavior of the software program based on one or more previous segments $MS_{n-1}$ of its behavior using a trained detection model $M_i$. The behavior may encompass one or more software or hardware performance indicators. The predicted segment may include a trusted boundary for the behavior of the software program. A time period covered by the predicted segment $PS_n$ may be constant or adaptable. The processing unit 12 is further configured to compare the predicted segment $PS_n$ with a measured segment $MS_n$ of the behavior of the software program. In case the measured segment $MS_n$ does not fit to the predicted segment $PS_n$, the occurrence of an attack is determined by the processing unit 12. Optionally, a type of attack may be identified by the processing unit 12 using trained classifiers $TC_i$. In case the occurrence of an attack is determined, a security event SE is reported by a reporting unit 13. For this purpose, a report R may be provided via an output 16 of the apparatus 10. The output 16 may be combined with the input 11 into a single interface. A local storage unit 15 is provided for storing data during processing.

The processing unit 12 and the reporting unit 13 may be controlled by a control unit 14. A user interface 17 may be provided for enabling a user to modify settings of the processing unit 12, the reporting unit 13, or the control unit 14. The processing unit 12, the reporting unit 13, and the control unit 14 can be embodied as dedicated hardware units. Of course, they may likewise be fully or partially combined into a single unit or implemented as software running on a processor, e.g., a CPU or a GPU.

A block diagram of a second embodiment of an apparatus 20 according to the invention for real-time detection of an attack on a software program running on a platform is illustrated in Fig. 3. The apparatus 20 comprises a processing device 22 and a memory device 21. For example, the apparatus 20 may be a computer, an electronic control unit, or an embedded system. The memory device 21 has stored instructions that, when executed by the processing device 22, cause the apparatus 20 to perform steps according to one of the described methods. The instructions stored in the memory device 21 thus tangibly embody a program of instructions executable by the processing device 22 to perform program steps as described herein according to the present principles. The apparatus 20 has an input 23 for receiving data. Data generated by the processing device 22 are made available via an output 24. In addition, such data may be stored in the memory device 21. The input 23 and the output 24 may be combined into a single bidirectional interface.

The processing device 22 as used herein may include one or more processing units, such as microprocessors, digital signal processors, or a combination thereof.

The local storage unit 15 and the memory device 21 may include volatile and/or non-volatile memory regions and storage devices such as hard disk drives, optical drives, and/or solid-state memories.

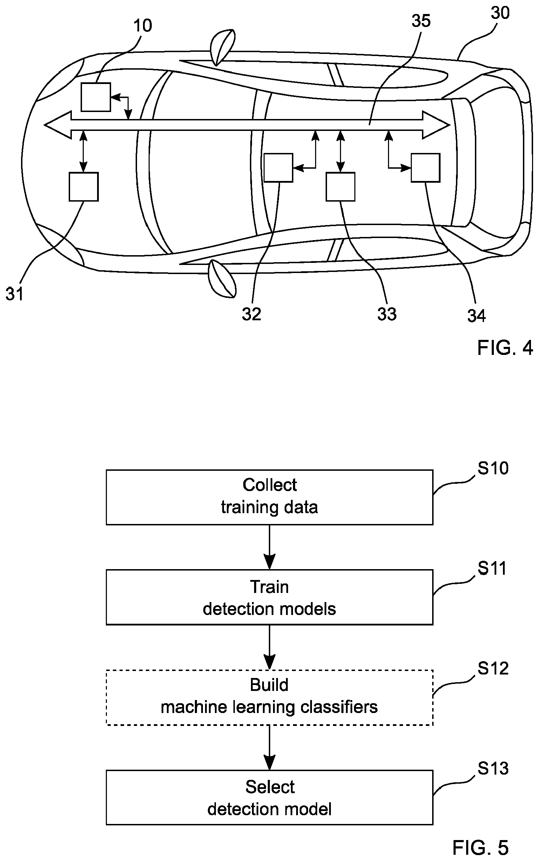

Fig. 4 schematically shows a machine 30, in which a solution in accordance with the invention is implemented. In this example, the machine 30 is a motor vehicle. The motor vehicle has at least one processing system 31, which provides a hardware-software platform. The processing system 31 may process data gathered by sensors 32 of the motor vehicle and provide automated driving functions. A data transmission unit 33 may allow a connection to a remote backend or to other motor vehicles or infrastructure units. A memory 34 is available for storing data. The data exchange between the different components of the motor vehicle takes place via a network 35. An apparatus 10 according to the invention is provided for real-time detection of an attack on a software program running on the hardware-software platform.

Fig. 5 schematically illustrates a method for providing a detection model for real-time detection of an attack on a software program running on a platform. In a first step, training data are collected S10 for normal execution of the software program and execution of the software program under one or more attacks. The training data may encompass one or more software or hardware performance indicators. One or more detection models are then trained S11 with the training data. Furthermore, machine learning classifiers may be built S12 for multiple attack types. Finally, one detection model is selected S13 among the one or more trained detection models.

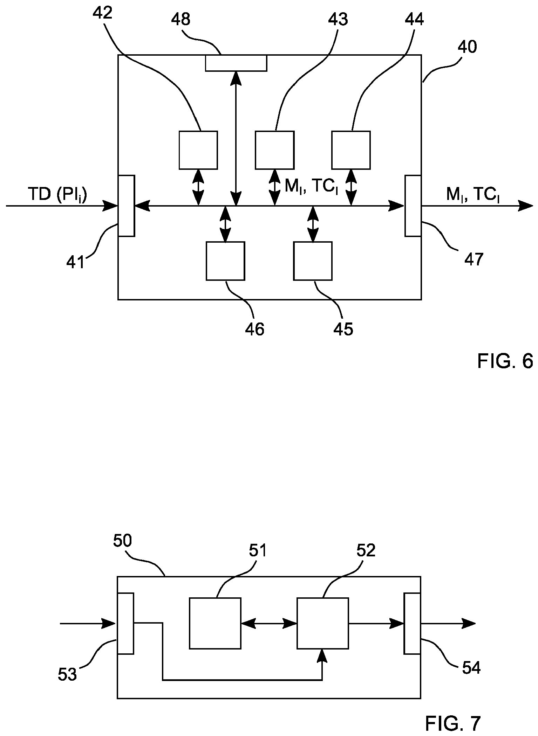

Fig. 6 schematically illustrates a block diagram of a first embodiment of an apparatus 40 according to the invention for providing a detection model for real-time detection of an attack on a software program running on a platform. The apparatus 40 has an input 41, via which a collecting unit 42 collects training data TD for normal execution of the software program and execution of the software program under one or more attacks. The training data TD may encompass one or more software or hardware performance indicators $PI_i$. A processing unit 43 is configured to train one or more detection models $M_i$ with the training data TD. The processing unit 43 may further be configured to build machine learning classifiers $TC_i$ for multiple attack types. An evaluation unit 44 is configured to select one detection model $M_i$ among the one or more trained detection models $M_i$. The selected detection model $M_i$ and the machine learning classifiers $TC_i$ may be made available via an output 47 of the apparatus 40. The output 47 may be combined with the input 41 into a single interface. A local storage unit 46 is provided for storing data during processing.

The collecting unit 42, the processing unit 43, and the evaluation unit 44 may be controlled by a control unit 45. A user interface 48 may be provided for enabling a user to modify settings of the collecting unit 42, the processing unit 43, the evaluation unit 44, or the control unit 45. The collecting unit 42, the processing unit 43, the evaluation unit 44, and the control unit 45 can be embodied as dedicated hardware units. Of course, they may likewise be fully or partially combined into a single unit or implemented as software running on a processor, e.g., a CPU or a GPU.

A block diagram of a second embodiment of an apparatus 50 according to the invention for providing a detection model for real-time detection of an attack on a software program running on a platform is illustrated in Fig. 7. The apparatus 50 comprises a processing device 52 and a memory device 51. For example, the apparatus 50 may be a computer, a workstation, or a distributed system. The memory device 51 has stored instructions that, when executed by the processing device 52, cause the apparatus 50 to perform steps according to one of the described methods. The instructions stored in the memory device 51 thus tangibly embody a program of instructions executable by the processing device 52 to perform program steps as described herein according to the present principles. The apparatus 50 has an input 53 for receiving data. Data generated by the processing device 52 are made available via an output 54. In addition, such data may be stored in the memory device 51. The input 53 and the output 54 may be combined into a single bidirectional interface.

The processing device 52 as used herein may include one or more processing units, such as microprocessors, digital signal processors, or a combination thereof.

The local storage unit 46 and the memory device 51 may include volatile and/or non-volatile memory regions and storage devices such as hard disk drives, optical drives, and/or solid-state memories.

In the following, further details of a solution according to the invention shall be given.

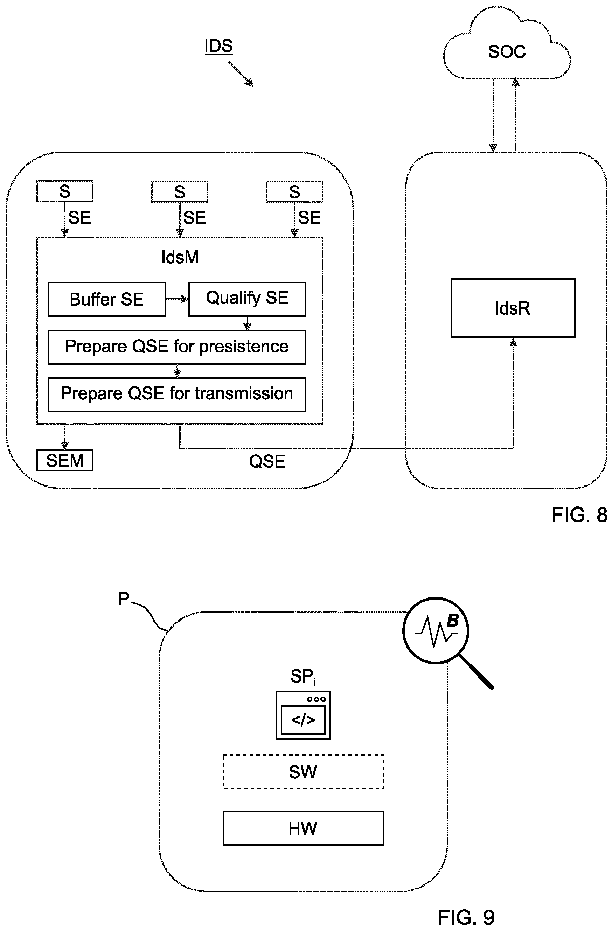

Fig. 8 schematically shows an overall concept of an intrusion detection system IDS with components specified in AUTOSAR. Security sensors S report security events SE to an intrusion detection system manager IdsM. The security sensors S are implemented in the AUTOSAR basic software or as software components. The intrusion detection system manager IdsM provides a standardized interface for receiving notifications of security events SE. The intrusion detection system manager IdsM performs a qualification of the security events SE to obtain qualified security events QSE. The intrusion detection system manager IdsM may also persist the qualified security events QSE in a security event memory SEM. An intrusion detection system reporter IdsR receives the qualified security events QSE from the instances of the intrusion detection system manager IdsM running in different electronic control units and enriches the data, e.g., by adding a respective geo-position. This data can then propagate to a security operations center SOC for further analysis.

Fig. 9 shows a high-level concept of a solution according to the invention for real-time detection of an attack on a software program $SP_i$ running on a platform P. As shown in Fig. 9, the software program $SP_i$ can be running directly on the hardware HW or on top of an optional software platform SW, e.g., an operating system. The described solution is based on the assumption that any software program $SP_i$ has a certain behavior $B$, which can be reflected by various performance indicators. This behavior may vary if the software program $SP_i$ is running different use-cases $(bi, b_2, ..., b_n)$, which can be included in $B=\{b_1, b_2, ..., b_n\}$. A further assumption is that an attack on the software program $SP_i$ changes the behavior $B$ by a detectable amount.

According to the invention, the behavior $B$ of a software program $SP_i$ is extracted based on its characteristics while running on a target hardware-software platform.

For example, modern processors have a performance monitor unit, which allows gathering various statistics on the operation of the core and its memory system during runtime. Performance monitor units offer many performance indicators that can be recorded for a specific software program $SP_i$ during its genuine runtime and derive a corresponding genuine behavior of the software program $SP_i$ on this specific hardware-software platform. Moreover, power consumption of a software program $SP_i$ can also be used as it correlates with the activity of the software program $SP_i$. This feature is also platform dependent.

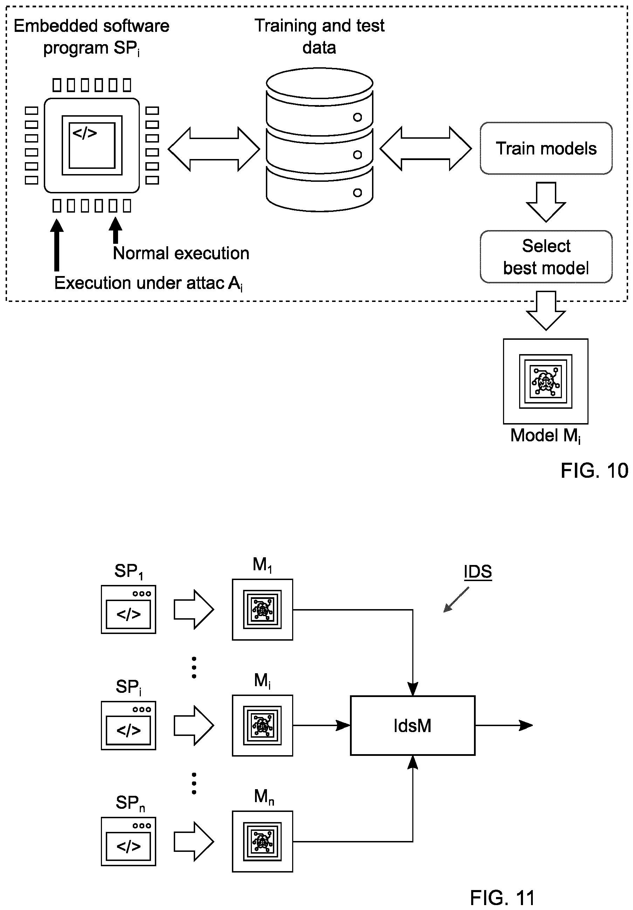

Fig. 10 shows a framework for providing a security sensor for a software program $SP_i$, which is based on artificial intelligence, e.g., machine learning. According to the invention, machine learning is used for creating a trustful activity model of any software program $SP_i$. Any execution of the software program $SP_i$ will be checked by this model for possible malicious activity. The framework is preferably automated and accepts as input a soft-ware program $SP_i$. As output, the framework generates a corresponding machine learning model $M_i$. The model $M_i$ acts as a security sensor to detect possible exploits of software program $SP_i$. As shown in Fig. 10, training and test data are collected for an embedded software program $SP_i$ for both normal execution and execution under one or more attacks $A_i$. One or more models are then trained using this data. Various machine learning algorithms can be used for this purpose, such as deep neural networks or long short-term memory networks. The best model $M_i$, e.g., in terms of accuracy and performance, is then selected and integrated in an intrusion detection system.

Fig. 11 shows an intrusion detection system IDS using trained models $M_1,... ,M_i,... ,M_n$ as security sensors. For each software program $SP_i$, a corresponding model $M_i$ can be built. It is likewise possible to only build models $M_i$ for selected software programs $SP_i$ found as relevant, e.g., software programs $SP_i$ that have a high security or safety impact on the system. The models $M_1,... ,M_i,... ,M_n$ report security events SE to the intrusion detection system manager IdsM.

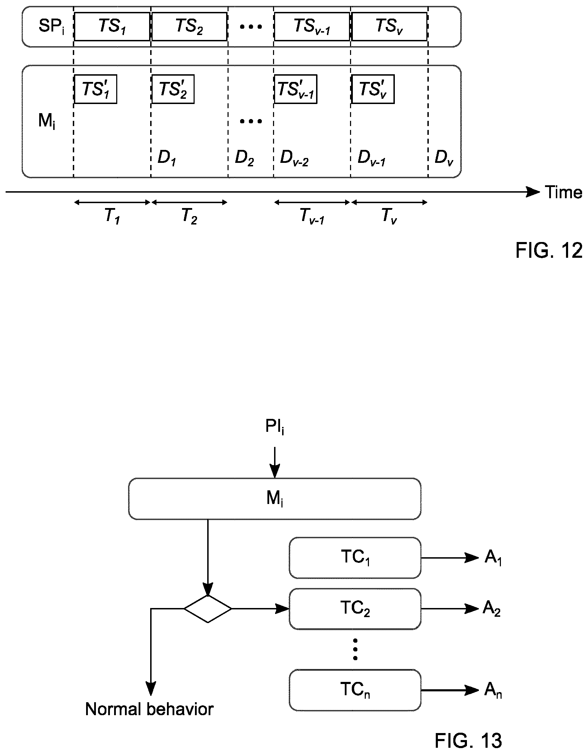

Fig. 12 shows real-time detection of an attack during execution of a software program $SP_i$. Real-time anomaly detection aims to detect abnormal behavior during the runtime of the software program $SP_i$. To this end, the behavior of the software program $SP_i$ is considered as a time series. The behavior of the next lapse of time is predicted by a trained model $M_i$ and compare to the real behavior during that lapse of time. Based on this comparison, a decision is made if there is an anomaly or not. As an example, a software program $SP_i$ may have an execution time $\sum_{j=1}^{v} T_j$. The real-time detection model $M_i$ computes a theoretical time series $TS'_j$ at the start of the time period $T_j$, where $j \in \{1, 2, ..., v\}$. The time periods $(T_1, T_2, ..., T_v)$ can be equal or different, depending on what fits best to the targeted software program $SP_i$. The computation of $TSj$ should take a time span $t < Tj$.

At the end of $T_j$, the measured trace $TS_j$ will be available. The real-time detection model $M_i$ compares the measured trace $TS_j$ to the computed trace $TS'_j$. The detection decision $D_j$ is taken at the end of each period $T_j$, such that $D_j = 1$ if the measured trace $TS_j$ does fit to the computed trace $TS'_j$, and $D_j = 0$ if the measured trace $TS_j$ does not fit to the computed trace $TS'_j$. In the latter case, a security event is reported, and various actions can be taken in real-time to avoid an exploit of the system. For the next time span $T_{j+1}$, the real-time detection model $M_i$ considers the previously measured trace $TS_j$ for forecasting $TS'_{j+1}$ .

To avoid false positives, a trusted boundary *TB* can be added to the forecasted time series, such that

$$TS''_{j,t} = TS'_{j,t} + TB$$

, where $TS''_{j,t}$ and $TS'_{j,t}$ are the values at time *t* for the forecasted times series with and without the trusted boundary *TB,* respectively.

Fig. 13 shows use of trained classifiers $TC_i$ for detecting the type of attack on a software program. Once a trained detection model $M_i$ detects an anomaly based on the performance indicators $PI_i$, the behavior may be provided to trained classifiers $TC_i$ to obtain further information on the attack. Building these classifiers $TC_i$ can be part of the same framework shown in Fig. 10, where the data resulting from executions under the same attack $A_i$ can be used to train a corresponding classifier $TC_i$. There are various options where to use the trained classifiers $TC_i$. For example, the trained classifiers $TC_i$ can be deployed in the security operations center shown in Fig. 8.

**Reference numerals**

| | |
|---|---|
| 10 | Apparatus |
| 11 | Input |
| 12 | Processing unit |
| 13 | Reporting unit |
| 14 | Control unit |
| 15 | Local storage unit |
| 16 | Output |
| 17 | User interface |
| 20 | Apparatus |
| 21 | Memory device |
| 22 | Processing device |
| 23 | Input |
| 24 | Output |
| 30 | Machine |
| 31 | Processing system |
| 32 | Sensor |
| 33 | Data transmission unit |
| 34 | Memory |
| 35 | Network |
| 40 | Apparatus |
| 41 | Input |
| 42 | Collecting unit |
| 43 | Processing unit |
| 44 | Evaluation unit |
| 45 | Control unit |
| 46 | Local storage unit |
| 47 | Output |
| 48 | User interface |

| | |
|---|---|
| 50 | Apparatus |
| 51 | Memory device |
| 52 | Processing device |
| 53 | Input |
| 54 | Output |

| | |
|---|---|
| $A_i$ | Attack |
| *B* | Behavior |
| HW | Hardware |
| IDS | Intrusion detection system |
| IdsM | Intrusion detection system manager |
| IdsR | Intrusion detection system reporter |
| $M_i$ | Trained detection model |
| $MS_n$ | Measured segment |
| P | Platform |
| $PI_i$ | Performance indicator |
| $PS_n$ | Predicted segment |
| QSE | Qualified security event |
| R | Report |
| S | Security sensor |
| SE | Security event |
| SEM | Security event memory |
| SOC | Security operations center |
| $SP_i$ | Software program |
| SW | Software platform |
| $TC_i$ | Trained classifier |
| TD | Training data |

| | |
|---|---|
| S1 | Predict segment of behavior |
| S2 | Measure segment of behavior |
| S3 | Compare predicted segment and measured segment |
| S4 | Determine occurrence of attack |
| S5 | Identify type of attack |
| S6 | Report security event |

| | |
|---|---|
| S10 | Collect training data |
| S11 | Train detection models |
| S12 | Build machine learning classifiers |
| S13 | Select detection model |

**Claims**

1. A method for real-time detection of an attack on a software program ($SP_i$) running on a platform (P), the method comprising:

   - predicting (S1) a segment ($PS_n$) of a behavior of the software program ($SP_i$) based on one or more previous segments ($MS_{n-1}$) of its behavior using a trained detection model ($M_i$);
   - comparing (S3) the predicted segment ($PS_n$) with a measured segment ($MS_n$) of the behavior of the software program ($SP_i$); and
   - reporting (S6) a security event (SE) in case the measured segment ($MS_n$) does not fit to the predicted segment ($PS_n$).

2. The method according to claim 1, wherein the predicted segment ($PS_n$) includes a trusted boundary for the behavior of the software program ($SP_i$).

3. The method according to claim 1 or 2, wherein a time period covered by the predicted segment ($PS_n$) is constant or adaptable.

4. The method according to one of the preceding claims, wherein the behavior encompasses one or more software or hardware performance indicators ($PI_i$).

5. The method according to claim 4, wherein the performance indicators ($PI_i$) include at least one or more of an execution time, a power consumption, a memory consumption, cycle counters, numbers of issued and/or retired instructions, and cache misses.

6. The method according to one of the preceding claims, further comprising identifying (S5) a type of attack.

7. A computer program code comprising instructions, which, when executed by at least one processor, cause the at least one processor to perform a method according to any of claims 1 to 6 for real-time detection of an attack on a software program ($SP_i$) running on a platform (P).

8. An apparatus (10) for real-time detection of an attack on a software program ($SP_i$) running on a platform (P), the apparatus (10) comprising:

    - a processing unit (12) configured to predict (S1) a segment ($PS_n$) of a behavior of the software program ($SP_i$) based on one or more previous segments ($MS_{n-1}$) of its behavior using a trained detection model ($M_i$), and to compare (S3) the predicted segment ($PS_n$) with a measured segment ($MS_n$) of the behavior of the software program ($SP_i$); and
    - a reporting unit (13) configured to report (S6) a security event in case the measured segment ($MS_n$) does not fit to the predicted segment ($PS_n$).

9. A machine (30), wherein the machine (30) comprises an apparatus (10) according to claim 8 or is configured to perform a method according to any of claims 1 to 6 for real-time detection of an attack on a software program ($SP_i$) running on a platform (P) of the machine (30).

10. A method for providing a detection model ($M_i$) for real-time detection of an attack on a software program ($SP_i$) running on a platform (P), the method comprising:

    - collecting (S10) training data (TD) for normal execution of the software program ($SP_i$) and execution of the software program ($SP_i$) under one or more attacks;
    - training (S11) one or more detection models ($M_i$) with the training data; and
    - selecting (S13) one detection model ($M_i$) among the one or more trained detection models ($M_i$).

11. The method according to claim 10, wherein the training data encompasses one or more software or hardware performance indicators ($PI_i$).

12. The method according to claim 10 or 11, further comprising building (S12) machine learning classifiers ($TC_i$) for multiple attack types.

13. A computer program code comprising instructions, which, when executed by at least one processor, cause the at least one processor to perform a method according to any of claims 10 to 12 for providing a detection model ($M_i$) for real-time detection of an attack on a software program ($SP_i$) running on a platform (P).

14. An apparatus (40) for providing a detection model ($M_i$) for real-time detection of an attack on a software program ($SP_i$) running on a platform (P), the apparatus (40) comprising:

    - a collecting unit (42) configured to collect (S10) training data (TD) for normal execution of the software program ($SP_i$) and execution of the software program ($SP_i$) under one or more attacks;
    - a processing unit (43) configured to train (S11) one or more detection models ($M_i$) with the training data; and
    - an evaluation unit (44) configured to select (S13) one detection model ($M_i$) among the one or more trained detection models ($M_i$).

15. A detection model ($M_i$) for real-time detection of an attack on a software program ($SP_i$) running on a platform (P), wherein the detection model ($M_i$) is provided by a method according to any of claims 10 to 12.

```
┌─────────────────────────┐
│     Predict segment     │  ⌐ S1
│       of behavior       │
└─────────────────────────┘
            │
            ▼
┌─────────────────────────┐
│     Measure segment     │  ⌐ S2
│       of behavior       │
└─────────────────────────┘
            │
            ▼
┌─────────────────────────┐
│   Compare predicted segment │  ⌐ S3
│    and measured segment     │
└─────────────────────────┘
            │
            ▼
┌─────────────────────────┐
│   Determine occurrence  │  ⌐ S4
│        of attack        │
└─────────────────────────┘
            │
            ▼
┌ ─ ─ ─ ─ ─ ─ ─ ─ ─ ─ ─ ─ ┐
│        Identify         │  ⌐ S5
│     type of attack      │
└ ─ ─ ─ ─ ─ ─ ─ ─ ─ ─ ─ ─ ┘
            │
            ▼
┌─────────────────────────┐
│         Report          │  ⌐ S6
│     security event      │
└─────────────────────────┘
```

FIG. 1

FIG. 2

FIG. 3

FIG. 4

FIG. 5

FIG. 6

FIG. 7

IDS

SOC

IdsM

| S | | S | | S |

SE    SE    SE

Buffer SE → Qualify SE

Prepare QSE for presistence

Prepare QSE for transmission

SEM              QSE

IdsR

FIG. 8

P

SP_i

</>

SW

HW

B

FIG. 9

Embedded software
program SP$_i$

Training and test
data

Train models

Select
best model

Normal execution

Execution under attac A$_i$

Model M$_i$

FIG. 10

SP$_1$

M$_1$

IDS

SP$_i$

M$_i$

IdsM

SP$_n$

M$_n$

FIG. 11

FIG. 12

FIG. 13

Europäisches
Patentamt

European
Patent Office

Office européen
des brevets

# EUROPEAN SEARCH REPORT

Application Number

EP 22 21 2096

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI CONGMIAO ET AL: "Detecting Malicious Attacks Exploiting Hardware Vulnerabilities Using Performance Counters", 2019 IEEE 43RD ANNUAL COMPUTER SOFTWARE AND APPLICATIONS CONFERENCE (COMPSAC), IEEE, vol. 1, 15 July 2019 (2019-07-15), pages 588-597, XP033610062, DOI: 10.1109/COMPSAC.2019.00090 ISBN: 978-1-7281-2607-4 [retrieved on 2019-07-02] | 1,7-10, 13-15 | INV. G06F21/52 G06F21/55 |
| Y | * Abstract; Introduction; Sections II-III, V; * | 2-6,11, 12 | |
| Y | MANAAR ALAM ET AL: "Performance Counters to Rescue: A Machine Learning based safeguard against Micro-architectural Side-Channel-Attacks", IACR, INTERNATIONAL ASSOCIATION FOR CRYPTOLOGIC RESEARCH , vol. 20170703:022503 8 June 2017 (2017-06-08), pages 1-25, XP061023631, Retrieved from the Internet: URL:http://eprint.iacr.org/2017/564.pdf [retrieved on 2017-06-08] * abstract; Introduction; Sections 2-3 * | 2,3 | |
| Y | US 2019/340392 A1 (KHORRAMI FARSHAD [US] ET AL) 7 November 2019 (2019-11-07) * paragraph [0054] – paragraph [0058] * * paragraphs [0065], [0083] * | 4-6,11, 12 | TECHNICAL FIELDS SEARCHED (IPC) G06F H04L |

The present search report has been drawn up for all claims

| Place of search | Date of completion of the search | Examiner |
|---|---|---|
| Munich | 28 April 2023 | Ghani, Hamza |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 21 2096**

This annex lists the patent family members relating to the patent documents cited in the above-mentioned European search report.
The members are as contained in the European Patent Office EDP file on
The European Patent Office is in no way liable for these particulars which are merely given for the purpose of information.

**28-04-2023**

| Patent document cited in search report | Publication date | Patent family member(s) | Publication date |
|---|---|---|---|
| US 2019340392 A1 | 07-11-2019 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20190215329 A1


### Non-patent literature cited in the description

- **M. MÜTER et al.** A structured approach to anomaly detection for in-vehicle networks. *2010 Sixth International Conference on Information Assurance and Security,* 92-98